# EUROPÄISCHE PATENTANMELDUNG

(11) **EP 3 170 689 A1**
(43) Veröffentlichungstag der Anmeldung: **24.05.2017**
(21) Anmeldenummer: 16198193.1
(22) Anmeldetag: 10.11.2016
(51) Int. Cl.: B60K 6/40, B60K 6/365

(54) **HYBRIDFAHRZEUG**

(30) Priorität: 21.11.2015 DE 102015015123
(71) Anmelder: AUDI AG, 85045 Ingolstadt (DE)
(72) Erfinder: Rothe, Albrecht, 85051 Ingolstadt (DE)

(57) **Zusammenfassung**

Die Erfindung betrifft ein Hybridfahrzeug (27) mit einem eine Verbrennungskraftmaschine (1) und einen Elektromotor (17, 17') umfassenden Hybridantrieb (18,18'). Dabei ist vorgesehen, dass die Verbrennungskraftmaschine (1) und der Elektromotor (17,17') in Einbaulage im Motorraum (39) nebeneinander und achsparallel angeordnet sind.

## Beschreibung

Die Erfindung betrifft ein Hybridfahrzeug mit einem Antriebsstrang, der einen eine Verbrennungskraftmaschine und einen Elektromotor umfassenden Hybridantrieb, ein Differentialgetriebe und ein Vorderachsdifferential aufweist, wobei die Verbrennungskraftmaschine über eine Motorwelle mit einer Getriebewelle des Differentialgetriebes antriebstechnisch verbunden ist, und wobei die Verbrennungskraftmaschine und der Elektromotor in Einbaulage in einem Motorraum des Hybridfahrzeugs nebeneinander und achsparallel angeordnet sind.

Mit steigendem Umweltbewusstsein und sich zukünftig verknappenden Energieressourcen rückt derzeit nicht nur im Automobilbereich eine hybride Antriebstechnik immer mehr in den Vordergrund. Wird dabei ein Hybridantrieb eingesetzt, der sowohl eine Verbrennungskraftmaschine als auch zumindest einen Elektromotor aufweist, stellt sich bei einem derartigen Hybridfahrzeug die Herausforderung, sowohl die Verbrennungskraftmaschine als auch den zumindest einen Elektromotor optimal in den Antriebsstrang und in den vorhandenen Bauraum zu integrieren.

Aus der DE 100 01 436 A1 ist eine Antriebsanordnung eines Hybridfahrzeuges bekannt, bei dem sowohl eine Verbrennungskraftmaschine als auch ein Elektromotor über ein gemeinsames Getriebe antriebstechnisch verbunden sind. Über das gemeinsame Getriebe kann ein Nebenaggregat angetrieben werden. Dabei ist das Getriebe als Planetengetriebe ausgebildet.

Die DE 10 2008 043 341 A1 offenbart einen Antriebsstrang eines Kraftfahrzeuges, das mit einem Hybridantrieb, umfassend eine Verbrennungskraftmaschine und einen Elektromotor, ausgestattet ist. Dabei ist der Verbrennungskraftmotor über ein Schaltgetriebe antriebstechnisch an den Antriebsstrang angebunden. Der Elektromotor wird über ein zusätzliches Planetengetriebe antriebstechnisch mit dem Antriebsstrang verbunden. Dabei ist es je nach Betriebszustand möglich, mit dem Elektromotor Leistung vor dem Schaltgetriebe und/oder nach dem Schaltgetriebe in den Antriebsstrang einzuspeisen.

In der EP 1 832 462 A1 ist eine Vorrichtung zur Verteilung einer Antriebskraft beschrieben, die als Planetengetriebe ausgebildet ist. Dabei kann ein Elektromotor antriebstechnisch an die Vorrichtung zur Verteilung einer Antriebskraft über ein Ritzel angebunden werden.

Die Integration eines Elektromotors in einen eine Verbrennungskraftmaschine und zumindest einen Elektromotor umfassenden Hybridantrieb ist konstruktiv aufwendig, insbesondere wenn der Elektromotor über zusätzliche, konstruktiv komplexe Baugruppen, wie beispielsweise Planetengetriebe, an weitere Komponenten des Antriebsstrangs, beispielsweise ein Getriebe, insbesondere ein Schaltgetriebe, angebunden ist beziehungsweise angebunden werden soll. Die Anbindung der Verbrennungskraftmaschine und/oder des Elektromotors ist vorzugsweise über eine Kupplung, insbesondere eine Schaltkupplung, realisiert. Zudem stellt sich bei der Integration eines Elektromotors in ein Kraftfahrzeug mit einem Verbrennungsmotor die Herausforderung, den knapp bemessenen, noch verbleibenden Bauraum so effektiv wie möglich auszunutzen.

Aus dem Stand der Technik ist beispielsweise die Druckschrift DE 199 41 705 A1 bekannt. Diese beschreibt einen Antriebsstrang, der eine Antriebseinheit mit einer Antriebswelle, eine Abtriebseinheit sowie eine in Wirkverbindung mit diesen stehende elektrische Maschine umfasst. Weiterhin ist aus der Druckschrift DE 10 2010 046 048 A1 eine Antriebsvorrichtung bekannt, die eine Verbrennungskraftmaschine und eine Kurbelwelle, eine elektrische Maschine, mit einem auf einer Rotorwelle umlaufenden Rotor, und eine Getriebeeinrichtung aufweist. Dabei ist vorgesehen, dass die Drehachse der Kurbelwelle und die Drehachse des Rotors parallel zueinander angeordnet sind, wobei die Elektromaschine und die Verbrennungskraftmaschine über ein Getriebeelement miteinander verbunden sind. Weiterhin ist vorgesehen, dass die Elektromaschine und die Verbrennungskraftmaschine eine gemeinsame, mit dem Getriebeelement verbundene Abtriebswelle aufweisen, welche mit einer Eingangswelle der Getriebeeinrichtung verbunden oder verbindbar ist, und dass zwischen der Rotorwelle der elektrischen Maschine und der gemeinsamen Abtriebswelle eine hydrodynamische Kupplung angeordnet ist.

Die vorliegende Erfindung beschäftigt sich mit der Aufgabe, für einen Hybridantrieb eine verbesserte oder zumindest eine alternative Ausführungsform anzugeben, die sich insbesondere durch eine synergetische Anbindung des Elektromotors unter optimaler Nutzung der vorhandenen antriebstechnischen Baugruppen und des noch nicht belegten Bauraumes auszeichnet.

Die Aufgabe wird gelöst, in dem ein Hybridfahrzeug mit den Merkmalen des Anspruchs 1 geschaffen wird. Dabei ist vorgesehen, dass der Elektromotor antriebstechnisch über eine Differential-Ritzelwelle des Vorderachsdifferentials oder über eine Schwungrad/Kupplungs-Baugruppe in den Antriebsstrang antriebstechnisch eingebunden ist. Vorteilhafte Ausgestaltungen ergeben sich aus den Unteransprüchen.

In einem Aspekt der Erfindung wird ein Hybridfahrzeug mit einem eine Verbrennungskraftmaschine und einen Elektromotor umfassenden

Hybridantrieb vorgeschlagen, wobei die Verbrennungskraftmaschine und der Elektromotor in Einbaulage im Motorraum nebeneinander und achsparallel angeordnet sind.

Vorteilhaft kann durch eine derartige achsparallele Anordnung von Verbrennungskraftmaschine und Elektromotor der noch verbleibende Bauraum im Motorraum optimal ausgenutzt werden. Zudem ist durch die achsparallele Ausrichtung der Verbrennungskraftmaschine sowie des Elektromotors eine Anbindung beider Komponenten an die weiteren Komponenten des Antriebsstrangs vereinfacht und mit konstruktiv einfachen Bauelementen möglich. Dabei können aufgrund der nahen Positionierung des Elektromotors zur Verbrennungskraftmaschine Komponenten des Antriebsstranges verwendet werden, die sich in unmittelbarer Nähe der Verbrennungskraftmaschine befinden.

Dabei versteht man unter einem Hybridantrieb einen Antrieb, der zumindest zwei verschiedene Antriebstechniken verwendet, also mehrere unterschiedliche Antriebsaggregate aufweist. So kann als ein erstes Antriebsaggregat eine Verbrennungskraftmaschine und als eine zweites Antriebsaggregat ein Elektromotor verwendet werden. Ist dabei der Hybridantrieb seriell ausgebildet, wird nur die Antriebsleistung eines der Antriebsaggregate über den Antriebsstrang direkt auf einen Untergrund übertragen und dadurch das Hybridfahrzeug angetrieben. Von dem jeweils anderen Antriebsaggregat wird lediglich Leistung bereitstellt, die über das das Hybridfahrzeug antreibende Antriebsaggregat zum Antreiben des Hybridfahrzeugs herangezogen wird. Es ist aber auch denkbar, dass der Hybridantrieb parallel ausgebildet ist, sodass beide Antriebsaggregate gleichzeitig und parallel Antriebsleistung bereitstellen, die direkt auf den Untergrund übertragen wird, also zum Antreiben des Hybridfahrzeugs herangezogen wird.

Unter dem Antriebsstrang des Hybridfahrzeugs sind alle Komponenten zu verstehen, die in dem Hybridfahrzeug Antriebsleistung generieren und/oder über die die Antriebsleistung auf den Untergrund, beispielsweise eine Straße, übertragen wird.

Unter einer achsparallelen Anordnung der Verbrennungskraftmaschine und des Elektromotors ist eine parallele Anordnung der jeweiligen Motorwellen beziehungsweise Abtriebswellen zumindest bei einer Draufsicht auf das Hybridfahrzeug, also vom Fahrzeugdach bzw. von der Motorhaube her, zu verstehen. Demzufolge können in der allgemeinen Ausführungsform einer achsparallelen Anordnung die Motorwellen nicht im eigentlichen Wortsinn achsparallel angeordnet sein, sondern nur in der Draufsicht parallel angeordnet zu sein scheinen. In anderen Worten sind die Motorwellen der Verbrennungskraftmaschine und des Elektromotors windschief zueinander angeordnet, liegen jedoch in zueinander parallel angeordneten gedachten Ebenen. Eine Drehachse der Motorwelle der Verbrennungskraftmaschine ist also in einer ersten Ebene angeordnete und eine Drehachse der Motorwelle des Elektromotors in einer zweiten Ebene, wobei die erste Ebene und die zweite Ebene parallel zueinander liegen. Die Drehachsen sind jedoch derart ausgerichtet, dass sie windschief zueinander liegen.

In einer bevorzugten Ausführungsform sind die Motorwellen von Verbrennungsmotor und Elektromotor jedoch dreidimensional achsparallel, also achsparallel im Wortsinn, zueinander angeordnet. Dies ist im Rahmen dieser Beschreibung grundsätzlich der Fall, falls nicht anders festgehalten. In einer weiteren Ausführungsform sind die Motorwellen zusätzlich parallel zur Längsachse des Hybridfahrzeuges angeordnet.

Die Verbrennungskraftmaschine und der Elektromotor sind nebeneinander angeordnet. Das bedeutet mit Hinblick auf ihre Motorwellen beziehungsweise deren Drehachsen, dass die Verbrennungskraftmaschine und der Elektromotor in axialer Richtung in Überdeckung vorliegen. Die Verbrennungskraftmaschine und der Elektromotor sollen also gerade nicht in axialer Richtung voneinander beabstandet, sondern vielmehr an wenigstens einer Axialposition nebeneinander angeordnet sein. Besonders bevorzugt liegt das in axialer Richtung kleinere der Antriebsaggregate, also der Verbrennungskraftmaschine und des Elektromotors, vollständig in Überdeckung mit dem in axialer Richtung größeren der Antriebsaggregate vor. Beispielsweise ist der Elektromotor in axialer Richtung kleiner als die Verbrennungskraftmaschine. Dabei versteht man unter einer Motorwelle diejenige Welle der Verbrennungskraftmaschine oder des Elektromotors, über die im Wesentlichen die zum Antreiben des Hybridfahrzeugs dienende Antriebsleistung bereitgestellt wird.

Die beschriebene Anordnung von Verbrennungskraftmaschine und Elektromotor liegt in deren Einbaulage vor. Darunter ist eine endgültige Anordnung von Verbrennungskraftmaschine und Elektromotor nach einer Montage des Hybridfahrzeugs zu verstehen. Die Einbaulage liegt also auch während eines Fahrbetriebs des Hybridfahrzeugs vor, während welchem mittels der Verbrennungskraftmaschine und/oder mittels des Elektromotors Antriebsleitung für ein Antreiben des Hybridfahrzeugs erzeugt und/oder bereitgestellt wird.

Es wird eine Ausführungsform des Hybridfahrzeuges vorgeschlagen, bei der der Elektromotor relativ zur Motorwelle der Verbrennungskraftmaschine auf der Seite eines Differenzials, insbesondere eines Vorderachsen-Differentials, angeordnet ist. Vorteilhaft kann durch eine derartige Anordnung des Elektromotors freier Bauraum auf der Seite des Differentials bzw. des Vorderachsdifferenzials und insbesondere auf der rechten Seite zu Einbau und Positionierung des Elektromotors verwendet werden.

Dabei ist unter einem Differenzial im Wesentlichen ein Getriebe zu verstehen, mit einer Antriebswelle beziehungsweise Eingangswelle und zwei Abtriebswellen beziehungsweise Ausgangswellen. Somit ist unter einem Vorderachsen-Differenzial dasjenige Differenzial zu verstehen, mit dem zumindest eine Vorderachse des Hybridfahrzeuges oder zumindest ein Vorderrad angetrieben werden. Beispielsweise ist der Elektromotor bezüglich einer Längsmittelachse des Hybridfahrzeugs in Vortwärtsfahrtrichtung gesehen rechts angeordnet.

Es wird eine Ausführungsform des Hybridfahrzeuges vorgeschlagen, bei der der Elektromotor antriebstechnisch an eine Differenzial-Ritzelwelle eines Differenzialgetriebes, insbesondere eines Vorderachsen-Differenzials, angebunden ist. Vorteilhaft kann bei einer derartigen Anbindung des Elektromotors über eine Differenzial-Ritzelwelle eines Differenzialgetriebes auf weitere komplexe Baugruppen zur Anbindung des Elektromotors an die weiteren Komponenten des Antriebsstrangs verzichtet werden, da die Anbindung über Anbindungselemente, wie beispielsweise Zahnräder oder dergleichen, vorgenommen werden kann. Ist zudem der Elektromotor achsparallel zur Verbrennungskraftmaschine und auf der Seite des jeweiligen Differenzials angeordnet, ist zudem die Anbindung über eine relativ kurze Strecke ermöglicht, sodass dadurch der konstruktive Aufwand zusätzlich verringert ist und Toleranzvorgaben vereinfacht realisiert werden können. So kann vorteilhaft beispielsweise eine konstruktiv aufwendige Getriebeverlängerung vermieden werden.

Zudem ist die radnahe Anbindung des Elektromotors an die weiteren Komponenten des Antriebsstrangs sowohl hinsichtlich des elektrischen Antriebs, als auch hinsichtlich der Rekuperation besonders effizient. Auch können Getriebefunktionen unabhängig von den zuvor erwähnten Betriebszuständen des Elektromotors ausgeführt werden. Weiterhin kann vorteilhaft bei Schaltvorgängen der Elektromotor in den Schaltpausen als Leistungsfüller bzw. Momentenfüller herangezogen werden, ohne die Getriebefunktion während des Schaltvorganges zu beeinflussen.

Dabei versteht man unter einem Differenzialgetriebe ein Getriebe, das mit einem Differenzial integral ausgebildet ist. Ein derartiges Differenzialgetriebe weist eine Differenzial-Ritzelwelle auf, über die die Antriebsleistung auf das jeweilige Differenzials übertragen wird. Das Differential kann in einer bevorzugten Ausführungsform als eine Baugruppe des Differentialgetriebes vorliegen, also in dieses integriert sein.

Es wird eine Ausführungsform des Hybridfahrzeuges vorgeschlagen, bei der der Elektromotor antriebstechnisch an ein eine Zahnradstufe mit ausbildendes Zahnrad der Differential-Ritzelwelle angebunden ist. Vorteilhaft kann unter Verwendung des Zahnrads der Differential-Ritzelwelle die Anbindung des Elektromotors an die weiteren Komponenten des Antriebsstrangs unter Einbeziehung von Bauelementen vorgenommen werden, die schon in einem Differenzialgetriebe vorhanden sind. Demzufolge kann auf weitere komplexere Bauelemente oder Baugruppen zur Anbindung des Elektromotors an die weiteren Komponenten des Antriebsstrangs oder auf eine konstruktiv aufwendige Umgestaltung der Komponenten des Antriebsstranges vorteilhaft verzichtet werden. Zudem ermöglicht vorteilhaft die Anbindung des Elektromotors an die Differential-Ritzelwelle eine funktionelle Entkopplung des Elektromotors von dem Differenzialgetriebe.

Dabei versteht man unter dem Zahnrad der Differenzial-Ritzelwelle ein Zahnrad oder ein äquivalentes antriebstechnisches Anbindungselement, das auf der Differential-Ritzelwelle an dem zum Differenzial gegenüberliegenden Ende angeordnet ist. Das Zahnrad bildet eine Zahnradstufe mit aus, insbesondere gemeinsam mit einem weiteren Zahnrad. Die Zahnräder können Bestandteil des Differenzialgetriebes sein.

Es wird eine Ausführungsform des Verfahrens vorgeschlagen, bei der der Elektromotor relativ zur Motorwelle auf der Seite eines die Verbrennungskraftmaschine startenden Startergenerators angeordnet ist. Vorteilhaft kann durch eine derartige Anordnung des Elektromotors schon vorhandener Bauraum verwendet werden, sodass ein Packaging im Motorraum auch bei Hinzufügen eines Elektromotors erleichtert durchgeführt werden kann. Dabei versteht man unter einem Startergenerator einen Elektromotor, mithilfe dessen die Verbrennungskraftmaschine gestartet werden kann. Ein derartiger Startergenerator kann beispielsweise als Riemenstartergenerator ausgebildet sein. Der Elektromotor kann bezüglich der Längsmittelachse des Hybridfahrzeugs in Vortwärtsfahrtrichtung gesehen links angeordnet sein.

Es wird eine Ausführungsform des Hybridfahrzeuges vorgeschlagen, bei der der Elektromotor an eine Schwungrad/Kupplungs-Baugruppe angebunden ist. Vorteilhaft kann über eine derartige Einbindung des Elektromotors in den Antriebsstrang auf zusätzliche komplexe Baugruppen zur Einbindung des Elektromotors verzichtet werden, da üblicherweise die Schwungrad/Kupplungs-Baugruppe Anbindungselemente aufweist, die dazu benutzt werden können, den Elektromotor in den Antriebsstrang einzubinden.

Zudem kann der Elektromotor antriebstechnisch nahe der Verbrennungskraftmaschine in den Antriebsstrang eingebunden werden, sodass die einbindungsrelevanten Komponenten des Antriebsstranges für den hohen von dem Elektromotor kommenden Leistungseintrag, insbesondere im Antriebsfall, ausgelegt sind. Auch ist die zum Leistungseinspeisungsort der Verbrennungskraftmaschine nahe Anordnung besonders effizient sowohl im Betriebszustandes des elektrischen Antriebs, als auch der Rekuperation. Weiterhin ermöglicht die Kupplungsfunktion der Schwungrad/Kupplungs-Baugruppe eine funktionelle Trennung der Verbrennungskraftmaschine von dem Elektromotor, so dass die Funktionen des Elektromotors unabhängig und entkoppelt vom Betriebszustand der Verbrennungskraftmaschine stattfinden können.

Dabei versteht man unter einer Schwungrad/Kupplungs-Baugruppe eine Baugruppe, die zumindest ein Schwungrad und zumindest eine Kupplung aufweist. So kann mittels der Kupplung die Verbrennungskraftmaschine in den Antriebsstrang eingebunden oder von demselben getrennt werden. Es ist dabei auch denkbar, dass das Schwungrad als Zweimassenschwungrad ausgebildet ist, sodass ein gleichmäßigerer Eintrag der Antriebsenergie von der Verbrennungskraftmaschine in den Antriebsstrang vorgenommen werden kann.

Es wird eine Ausführungsform des Hybridfahrzeuges vorgeschlagen, bei welcher der Elektromotor an einem Kupplungskäfig der Schwungrad/Kupplungs-Baugruppe angebunden ist. Vorteilhaft kann bei einer derartigen Einbindung des Elektromotors in den Antriebsstrang ein schon vorhandenes Bauelement verwendet werden, ggf. mit einer einfachen konstruktiven Umwandlung, sodass auf weitere komplexere Baugruppen für die Einbindung des Elektromotors in den Antriebsstrang verzichtet werden kann. Wird dabei je nach verwendeter Kupplung die Anbindung des Elektromotors derart vorgenommen, dass bei gelöster Kupplung der Elektromotor dennoch mit dem Antriebsstrang beziehungsweise mit den weiteren Komponenten verbunden ist, so kann vorteilhaft auch bei abgeschalteter Verbrennungskraftmaschine bzw. entkoppelter Verbrennungskraftmaschine das Hybridfahrzeug weiterhin durch den Elektromotor angetrieben werden.

Es wird eine Ausführungsform des Hybridfahrzeuges vorgeschlagen, bei der der Elektromotor an einem Schwungrad der Schwungrad/Kupplungs-Baugruppe angebunden ist. Vorteilhaft kann bei einer derartigen Einnbindung des Elektromotors in den Antriebsstrang der Elektromotor ohne Verwendung weiterer komplexerer Baugruppen, beispielsweise eines Zahnriemens, in den Antriebsstrang eingebunden werden.

Es wird eine Ausführungsform des Hybridfahrzeuges vorgeschlagen, bei der mit dem Elektromotor die Verbrennungskraftmaschine gestartet werden kann. Vorteilhaft kann unter Verwendung des Elektromotors als Startergenerator auf einen ggf. ursprünglich vorhandenen Startergenerator zum Starten der Verbrennungskraftmaschine verzichtet werden. In diesem Fall kann vorteilhaft der Elektromotor unter Ausnutzung des freiwerdenden Bauraumes zumindest teilweise im Bereich des ursprünglich vorhandenen Startergenerators positioniert werden.

Es wird eine Ausführungsform des Hybridfahrzeuges vorgeschlagen, bei welcher der Elektromotor über ein als Planetengetriebe ausgebildetes Anbindungselement antriebstechnisch an wenigstens eine weitere Komponente eines Antriebsstranges des Hybridfahrzeuges angebunden ist. Vorteilhaft kann unter Verwendung einer zusätzlichen komplexeren Baugruppe, wie ein Planetengetriebe, eine variantenreichere und/oder funktionsreichere Einbindung des Elektromotors in den Antriebsstrang vorgenommen werden. So kann beispielsweise mittels eines Planetengetriebes eine verbesserte Drehzahladaption des Elektromotors zu zumindest einem angetriebenen Rad ermöglicht werden. Dabei ist es auch denkbar, dass der Elektromotor an mehrere Komponenten des Antriebsstrangs antriebstechnisch angeschlossen wird.

Die Erfindung wird nachfolgend anhand der in der Zeichnung dargestellten Ausführungsformen erläutert, ohne dass eine Beschränkung der Erfindung erfolgt. Dabei zeigen:
- Fig. 1: eine schematische Darstellung eines Hybridantriebs mit einem an eine Verbrennungskraftmaschine angebundenen Differenzialgetriebe und mit einem Elektromotor, der wahlweise über das Differenzialgetriebe oder über eine Schwungrad/Kupplungs-Baugruppe an den Antriebsstrang angebunden ist, sowie
- Fig. 2: einen Antriebsstrang umfassend zumindest eine Verbrennungskraftmaschine, ein Differenzialgetriebe und einen Elektromotor.

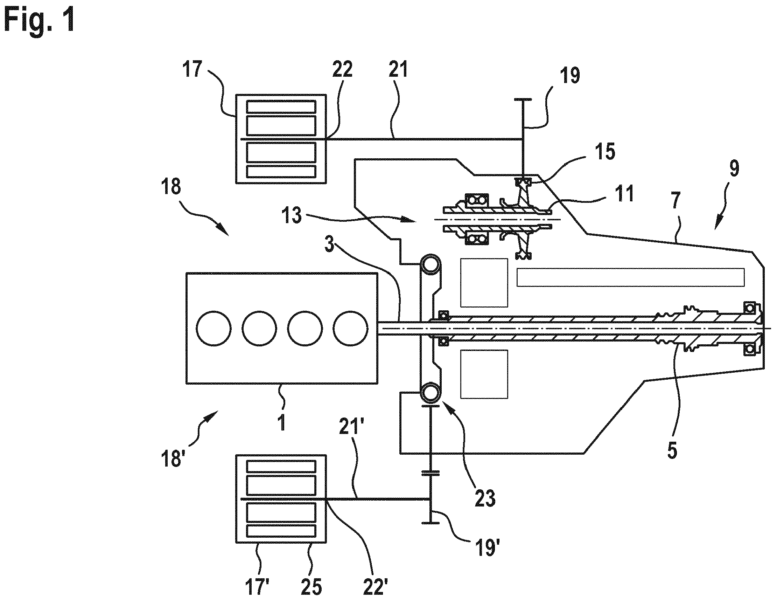

Wie in Fig. 1 gezeigt, kann eine Verbrennungskraftmaschine 1 über ihre Motorwelle 3 mit einer Getriebewelle 5 eines Differenzialgetriebes 7 antriebstechnisch verbunden sein. Dabei kann das Differenzialgetriebe 7 zur Schaltung der unterschiedlichen Gänge mit einem Schaltgetriebe 9 ausgestattet sein. Des Weiteren weist das Differenzialgetriebe 7 eine Differenzial-Ritzelwelle 11 auf, wobei die Differenzial-Ritzelwelle 11 als Antrieb für ein Differenzial 13 fungiert. Zudem weist die Differenzial-Ritzelwelle 11 eine Stirnradstufe 15 auf, mit der die Differenzial-Ritzelwelle 11 beispielsweise über das Schaltgetriebe 9 angetrieben werden. Ist noch zumindest ein Elektromotor 17,17' vorgesehen, so bildet zumindest die Verbrennungskraftmaschine 1 zusammen mit dem zumindest einen Elektromotor 17,17' einen Hybridantrieb 18,18' aus.

In einer möglichen Ausführungsform kann der Elektromotor 17 antriebstechnisch an die Differenzial-Ritzelwelle 11 und insbesondere über die Stirnradstufe 15 antriebstechnisch angebunden sein. Vorteilhaft kann bei einer derartigen Anbindung des Elektromotors 17 auf komplexe Baugruppen verzichtet werden, sodass ein Anbindungselement 19, über welches die antriebstechnische Anbindung des Elektromotors an der Differenzial-Ritzelwelle 11 bzw. an der Stirnradstufe 15 vorgenommen wird, beispielsweise als Zahnrad oder dergleichen ausgebildet sein kann. Es ist aber auch denkbar, das Anbindungselement 19 beispielsweise als Planetengetriebe auszubilden, um eine funktionsreichere und variantenreichere Anbindungstechnik zur Verfügung zu stellen. Dabei weist der Elektromotor 17 ebenfalls eine Motorwelle 21 auf, so dass der Elektromotor über seinen an der Motorwelle 21 angeordneten Abtrieb 22 antriebstechnisch mit dem Anbindungselement 19 verbunden ist.

Um den Bauraum optimal auszunutzen, werden der Elektromotor 17 und der Verbrennungskraftmotor 1 derart angeordnet, dass die beiden Motorwellen 3, 21 zumindest hinsichtlich einer Draufsicht aus Richtung eines Dach oder einer Motorhaube gesehen parallel angeordnet sind. Es ist aber auch denkbar, dass die Motorwellen 3, 21 im Wesentlichen dreidimensional parallel zueinander angeordnet sind.

Des Weiteren ist die Verbrennungskraftmaschine 1 mit einer Schwungrad/Kupplungs-Baugruppe aus 23 ausgestattet, über die die Verbrennungskraftmaschine 1 mit der Getriebewelle 5 verbunden werden kann. Mittels deren Schwungrad/Kupplungs-Baugruppe kann die Verbrennungskraftmaschine 1 antriebstechnisch von der Getriebewelle 5 entkoppelt werden. Zudem kann über die Schwungrad/Kupplungs-Baugruppe 23 die Verbrennungskraftmaschine 1 gestartet werden.

Nun ist es in einer weiteren Ausführungsform möglich, dass ein Elektromotor 17' antriebstechnisch mittels der Schwungrad/Kupplungs-Baugruppe 23 angebunden wird. Demzufolge ist der Elektromotor 17' mittels eines Anbindungselementes 19' antriebstechnisch mit der Schwungrad/KupplungsBaugruppe 23 verbunden. Da es in diesem Fall möglich ist, dass der Elektromotor 17' die Funktion eines Startergenerators 25 übernehmen kann, kann auf einen zusätzlichen Startergenerator verzichtet werden, sodass der freiwerdende Bauraum zum Einbau und der Anordnung des Elektromotors 17' herangezogen werden kann.

Weiterhin kann, wie in Fig. 1 dargestellt, das Anbindungselement 19' als Planetengetriebe ausgebildet sein. Es ist aber auch denkbar, dass die Anbindung des Elektromotors 17' über seinen Abtrieb 22' an die Schwungrad/Kupplungs-Baugruppe 23 mittels eines Zahnrades, eines Keilriemens, eines Zahnriemens oder dergleichen vorgenommen wird.

Um den Bauraum optimal auszunutzen, wird auch in dieser Ausführungsform der Elektromotor 17' und der Verbrennungskraftmotor 1 derart angeordnet, dass die beiden Motorwellen 3, 21' zumindest hinsichtlich einer Oberseiten-Aufsicht vom Dach oder der Motorhaube her parallel angeordnet sind. Es ist aber auch denkbar, dass die Motorwellen 3, 21 im Wesentlichen dreidimensional parallel zueinander angeordnet sind.

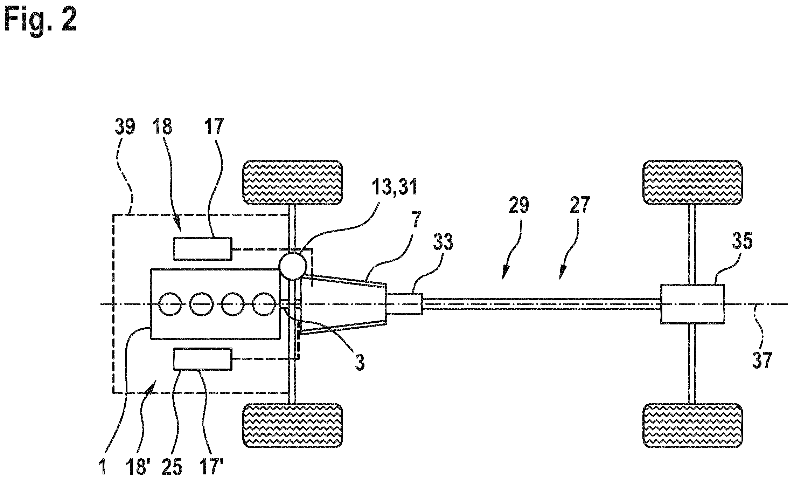

Ein Hybridfahrzeug 27, wie In Fig. 2 dargestellt, weist einen Antriebsstrang 29 auf, der zumindest aus einer Verbrennungskraftmaschine 1, aus einem Elektromotor 17, 17', aus einem Differenzialgetriebe 7, einem Vorderachsdifferenzial 31 und optional aus einem getriebeseitigen Schaltgetriebe 33, insbesondere einem Transporter-Schaltgetriebe, ausgebildet ist. Zusätzlich kann in dem Antriebsstrang 29 auch ein Hinterachsen-Differenzial 35 angeordnet sein. Dabei ist die Verbrennungskraftmaschine 1 über ihre Motorwelle 3 mit dem Differenzialgetriebe 7 antriebstechnisch verbunden.

In einer Ausführungsform ist ein Elektromotor 17 bezüglich einer Längsmittelachse 37 des Hybridfahrzeugs 27 in Vortwärtsfahrtrichtung gesehen rechts angeordnet und demzufolge bei der in der Fig. 2 dargestellten Variante eines Hybridfahrzeuges im Bereich des Differenzials 13 und insbesondere des Vorderachsdifferenzials 31. Demzufolge gelingt die Anbindung des Elektromotors 17 an das Differenzialgetriebe 7 vereinfacht, da die Anbindung des Elektromotors 17 über die Differenzial-Ritzelwelle 11 bzw. bevorzugt über deren Stirnradstufe 15 vorgenommen wird. Demzufolge ist der Anbindungsweg dementsprechend kurz.

In einer weiteren Ausführungsform wird der Elektromotor 17'bezüglich der Längsmittelachse 37 in Vortwärtsfahrtrichtung gesehen links angeordnet und demzufolge in einem Bereich, wo üblicherweise ein Startergenerator angeordnet ist, mit dem die Verbrennungskraftmaschine gestartet werden kann. Dabei gelingt die antriebstechnische Anbindung des Elektromotors 17' in den Antriebsstrang 29 über die Schwungrad/Kupplungs-Baugruppe 23, die in der Fig. 2 nicht dargestellt ist.

Bevorzugt sind dabei der Verbrennungskraftmotor 1 und der Elektromotor 17, 17' nebeneinander und achsparallel angeordnet, sodass zumindest in der Oberseiten-Aufsicht auf einen Motorraum 39, vom Dach bzw. der Motorhaube her, die Motorwellen 3, 21 parallel zueinander orientiert sind.

## Patentansprüche

1. Hybridfahrzeug mit einem Antriebsstrang (29), der einen eine Verbrennungskraftmaschine (1) und einen Elektromotor (17,17') umfassenden Hybridantrieb (18,18'), ein Differentialgetriebe (7) und ein Vorderachsdifferential (31) aufweist, wobei die Verbrennungskraftmaschine (1) über eine Motorwelle (3) mit einer Getriebewelle (5) des Differentialgetriebes (7) antriebstechnisch verbunden ist, und wobei die Verbrennungskraftmaschine (1) und der Elektromotor (17,17') in Einbaulage in einem Motorraum (39) des Hybridfahrzeugs nebeneinander und achsparallel angeordnet sind, **dadurch gekennzeichnet, dass** der Elektromotor (17) antriebstechnisch über eine Differential-Ritzelwelle (11) des Vorderachsdifferentials (31) oder über eine Schwungrad/Kupplungs-Baugruppe (23) in den Antriebsstrang (29) antriebstechnisch eingebunden ist.

2. Hybridfahrzeug nach Anspruch 1, **dadurch gekennzeichnet, dass** der Elektromotor (17) relativ zur Motorwelle (3) der Verbrennungskraftmaschine (1) auf der Seite des Vorderachsdifferentials (31) angeordnet ist.

3. Hybridfahrzeug nach einem der vorhergehenden Ansprüche, **dadurch gekennzeichnet, dass** der Elektromotor (17) antriebstechnisch an eine Stirnradstufe (15) der Differential-Ritzelwelle (11) angebunden ist.

4. Hybridfahrzeug nach einem der vorhergehenden Ansprüche, **dadurch gekennzeichnet, dass** der Elektromotor (17') relativ zur Motorwelle (3) auf der Seite eines die Verbrennungskraftmaschine (1) startenden Startergenerators (17', 25) angeordnet ist.

5. Hybridfahrzeug nach einem der vorhergehenden Ansprüche, **dadurch gekennzeichnet, dass** der Elektromotor antriebstechnisch an einen Kupplungskäfig der Schwungrad/Kupplungs-Baugruppe (23) angebunden ist.

6. Hybridfahrzeug nach einem der vorhergehenden Ansprüche, **dadurch gekennzeichnet, dass** der der Elektromotor (17) antriebstechnisch an ein Schwungrad der Schwungrad/Kupplungs-Baugruppe (23) angebunden ist.

7. Hybridfahrzeug nach einem der vorhergehenden Ansprüche, **dadurch gekennzeichnet, dass** mit dem Elektromotor (17') die Verbrennungskraftmaschine (1) gestartet werden kann.

8. Hybridfahrzeug nach einem der vorhergehenden Ansprüche, **dadurch gekennzeichnet, dass** der Elektromotor (17,17') über ein als Planetengetriebe (19') ausgebildetes Anbindungselement (19,19') antriebstechnisch an die jeweilige Komponente (11,13, 15,23) des Antriebsstrangs (29) des Hybridfahrzeuges (1) angebunden ist.
